# EUROPÄISCHE PATENTANMELDUNG

(11) **EP 3 428 496 A1**
(43) Veröffentlichungstag der Anmeldung: **16.01.2019**
(21) Anmeldenummer: 18180408.9
(22) Anmeldetag: 28.06.2018
(51) Int. Cl.: F16K 31/60, E03C 1/04, G05G 1/12

(54) **BEDIENELEMENT SOWIE EINE DAS BEDIENELEMENT AUFWEISENDE BAUEINHEIT**

(30) Priorität: 12.07.2017 DE 102017115684
(71) Anmelder: Grohe AG, 58675 Hemer (DE)
(72) Erfinder: Loi, Thomas, 23795 Bad Segeberg (DE)

(57) **Zusammenfassung**

Die Erfindung betrifft ein Bedienelement (3) für eine Sanitärarmatur (2) mit einem ersten Formschlusselement (5), mit dem das um eine Drehachse (11) drehbare Bedienelement (3) drehfest mit einem korrespondierenden zweiten Formschlusselement (6) eines dafür vorgesehenen Ventilkörpers (4) verbindbar ist, und mit zumindest einer Axialsicherungseinheit (12), mittels derer zur axialen Sicherung des Bedienelements (3) an dem dafür vorgesehenen Ventilkörper (3) in Richtung der Drehachse (11) eine Axialkraft (13) erzeugbar ist. Erfindungsgemäß ist es vorgesehen, dass die Axialsicherungseinheit (12) wenigstens einen Umlenkmechanismus (16) aufweist, der die Axialkraft (13) derart umlenkt, dass das erste Formschlusselement (5) in Radialrichtung des Bedienelements (3) gegen das zweite Formschlusselement (6) des dafür vorgesehenen Ventilkörpers (4) drückbar ist. Ferner umfasst die Erfindung eine Baueinheit (1) und eine Sanitärarmatur (2).

## Beschreibung

Die vorliegende Erfindung betrifft ein Bedienelement für eine Sanitärarmatur mit einem ersten Formschlusselement, mit dem das um eine Drehachse drehbare Bedienelement drehfest mit einem korrespondierenden zweiten Formschlusselement eines dafür vorgesehenen Ventilkörpers verbindbar ist, und mit zumindest einer Axialsicherungseinheit, mittels derer zur axialen Sicherung des Bedienelements an dem dafür vorgesehenen Ventilkörper in Richtung der Drehachse eine Axialkraft erzeugbar ist.

Aus dem Stand der Technik sind hinlänglich Bedienelemente bekannt, die auf eine Komponente einer Sanitärarmatur gesteckt und gegen eine feste Anschlagsfläche geschraubt werden. So zeigt die CA 2 655 523 A1 eine Montageeinheit mit einem Bedienelement, welches auf ein Ventilteil gesteckt und mit diesem zur axialen Sicherung verschraubt wird. Aufgrund hoher Fertigungstoleranzen im Sanitärbereich, entsteht hierbei häufig ein ungleichmäßiges Spaltbild und/oder eine wackelige Verbindung zwischen den Bauteilen.

Aufgabe der vorliegenden Erfindung ist es somit, ein Bedienelement bereitzustellen, das im Wesentlichen wackelfrei mit den dafür vorgesehenen Komponenten verbunden werden kann.

Die der Erfindung zugrundeliegende Aufgabe wird durch die Merkmale der unabhängigen Patentansprüche gelöst. Weitere vorteilhafte Ausgestaltungen ergeben sich aus den Unteransprüchen und den Zeichnungen.

Vorgeschlagen wird ein Bedienelement für eine Sanitärarmatur mit einem ersten Formschlusselement und zumindest einer Axialsicherungseinheit. Mit dem ersten Formschlusselement ist das Bedienelement drehfest mit einem korrespondierenden zweiten Formschlusselement eines dafür vorgesehenen Ventilkörpers verbindbar. Das Bedienelement ist um eine Drehachse drehbar. Das Bedienelement wird vorzugsweise um die Drehachse gedreht, um den Ventilkörper derart zu betätigen, dass ein Wasserausfluss an- oder abgestellt werden kann. Die beiden Formschlusselemente sind vorzugsweise drehmomentübertragend ausgebildet, so dass die Drehung des Bedienelements auf den Ventilkörper übertragbar ist. Zur Montage des Bedienelements an dem dafür vorgesehenen Ventilkörper, wird dieses vorzugsweise entlang der Drehachse auf den Ventilkörper gesteckt. Zur axialen Sicherung des an dem Ventilkörper angeordneten Bedienelements ist mittels der Axialsicherungseinheit eine Axialkraft erzeugbar. Die Axialkraft wirkt in Richtung der Drehachse.

Die Axialsicherungseinheit weist wenigstens einen Umlenkmechanismus auf. Der Umlenkmechanismus lenkt die Axialkraft derart um, dass das erste Formschlusselement in Radialrichtung des Bedienelements gegen das zweite Formschlusselement des dafür vorgesehenen Ventilkörpers drückbar ist. Das Bedienelement ist dadurch im Wesentlichen auf den Ventilkörper geklemmt. Der Umlenkmechanismus ist vorzugsweise derart ausgebildet, dass wenigstens ein im Wesentlichen quer und/oder schräg zur Axialkraft verlaufender Bereich des Umlenkmechanismus die Axialkraft schneidet. Der Kraftweg der Axialkraft ist durch den Umlenkmechanismus vorzugsweise derart beeinflusst, dass die Axialkraft quer zur eigentlichen Kraftrichtung, insbesondere in Radialrichtung, umgelenkt wird. Das Bedienelement ist an dem dafür vorgesehenen Ventilkörper konstruktiv einfach montierbar.

Vorteilhaft ist es, wenn der Umlenkmechanismus eine Umlenkschräge zur Aufnahme und Umlenkung der Axialkraft aufweist. Die Umlenkschräge verläuft insbesondere schräg zur Drehachse. Die Axialkraft und die Umlenkschräge bilden vorzugsweise einen gemeinsamen Schnittpunkt aus. Die Umlenkschräge ist vorzugsweise derart an dem Bedienelement ausgebildet, dass im Bereich des Schnittpunkts der Axialkraft und der Umlenkschräge eine resultierende Kraft entsteht, durch welche das erste Formschlusselement in Radialrichtung gedrückt wird. Die Axialkraft wird durch das Zusammenwirken der Axialsicherungseinheit mit dem Umlenkmechanismus in Richtung der Drehachse umgeleitet, so dass das erste Formschlusselement an das dafür vorgesehene zweite Formschlusselement geklemmt wird.

Einen weiteren Vorteil stellt es dar, wenn die Axialsicherungseinheit eine sich in Axialrichtung erstreckende Bohrung und/oder einen in der Bohrung befestigen Sicherungsstift aufweist. Alternativ oder zusätzlich ist es von Vorteil, wenn die Bohrung radial von der Drehachse beabstandet ist. Der Sicherungsstift ist insbesondere über eine Schraubverbindung in der Bohrung befestigt. Ebenso ist es denkbar, den Sicherungsstift über eine Pressverbindung in der Bohrung zu befestigen. Um das Bedienelement axial an dem Ventilkörper zu sichern, wird der Sicherungsstift vorzugsweise unter Erzeugung der Axialkraft in die Bohrung eingebracht. Das Bedienelement umfasst vorzugsweise mehrere radial um das erste Formschlusselement angeordnete Bohrungen. Wenn der Sicherungsstift nicht in der Bohrung angeordnet ist, ist zwischen dem ersten Formschlusselement und der Drehachse ein erster Radius ausgebildet. Sobald der Sicherungsstift in der Bohrung angeordnet ist und mit dem Umlenkmechanismus in Wirkverbindung steht, wird das erste Formschlusselement in Richtung der Drehachse gedrückt. Vorzugsweise verkleinert sich hierdurch der erste Radius auf einen zweiten Radius. Hierdurch erhöht sich der Druck auf das dafür vorgesehene zweite Formschluss-element, welches mit dem ersten Formschlusselement verbunden ist, so dass das Bedienelement axial an dem Ventilkörper gesichert ist. Das Bedienelement ist vorzugsweise wackelfrei mit dem Ventilkörper verbunden.

Um die Axialkraft gezielt in Radialrichtung umzulenken, weist die Bohrung vorteilhafterweise einen in Radialrichtung auslenkbaren ersten Bohrungsteil und/oder einen ortsfesten zweiten Bohrungsteil auf. Der erste Bohrungsteil ist insbesondere in Radialrichtung schwenkbar und/oder verschiebbar. Der erste Bohrungsteil ist vorzugsweise benachbart zu dem ersten Formschluss-element angeordnet. Der erste Bohrungsteil ist vorzugsweise an dem zweiten Bohrungsteil verankert. Der erste Bohrungsteil ist vorzugsweise derart angeordnet, dass ein Teil dessen mit der Axialkraft den Schnittpunkt ausbildet. Wenn die Axialkraft auf den beweglichen ersten Bohrungsteil wirkt, wird dieser vorzugsweise in Richtung der Drehachse ausgelenkt. Diese gezielte Kraftumlenkung ist insbesondere möglich, da der zweite Bohrungsteil ortsfest und somit im Wesentlichen an dem Bedienelement unbeweglich ausgebildet ist.

Von Vorteil ist es, wenn die beiden Bohrungsteile zumindest teilweise durch eine Trennausnehmung voneinander getrennt sind. Der erste Bohrungsteil ist durch die Trennausnehmung gegenüber dem zweiten Bohrungsteil in Radialrichtung beweglich. Die Trennausnehmung erstreckt sich in Querrichtung der Bohrung vorzugsweise vollständig durch diese hindurch, so dass der erste Bohrungsteil im Wesentlichen einen flexiblen Steg ausbildet. Die Trennausnehmung ist vorzugsweise ein Schlitz. Hierdurch wird auf konstruktiv einfache Weise ermöglicht, dass die zur Erzeugung der Radialkraft notwendige Auslenkung des Bohrungsteils aufgebracht wird.

Die Trennausnehmung erstreckt sich vorteilhafterweise in Bohrungslängsrichtung in Richtung eines offenen zweiten Bohrungsendes. Zusätzlich oder alternativ ist es von Vorteil, wenn sich die Trennausnehmung von Seiten eines geschlossenen ersten Bohrungsendes in Richtung des offenen zweiten Bohrungsendes erstreckt. Das zweite Bohrungsende ist vorzugsweise ventilkörperseitig an dem Bedienelement ausgebildet. Das erste Bohrungsende ist vorzugsweise sicherungsstiftseitig an dem Bedienelement ausgebildet. Wenn der Sicherungsstift in die Bohrung eingebracht wird, erfährt der erste Bohrungsteil erst eine Auslenkung, wenn der Sicherungsstift über das geschlossene Bohrungsende hinaus eingedreht ist und die Axialkraft einen Schnittpunkt mit dem Umlenkmechanismus bildet. Die derartige Ausbildung der Trennausnehmung ermöglicht eine gezielte Kraftumlenkung der Axialkraft in Richtung des ersten Formschlusselements.

Des Weiteren ist es vorteilhaft, wenn die Umlenkschräge am ersten Bohrungsteil ausgebildet ist. Alternativ oder ergänzend ist es von Vorteil, wenn die Umlenkschräge am Sicherungsstift ausgebildet ist. Die Umlenkschräge ist vorzugsweise an dem Sicherungsstift ausgebildet, so dass dieser einfach in die Bohrung eingedreht werden kann. Der Sicherungsstift weist dabei im Wesentlichen eine Spitze auf, an welcher die Umlenkschräge ausgebildet ist. Die eigentliche Kraftumlenkung erfolgt, wenn der Sicherungsstift, insbesondere dessen Umlenkschräge, so weit in die Bohrung eingebracht ist, dass diese das weitere Eindringen des Sicherungsstifts verhindert. Hierbei entsteht ein Druck, durch den der erste Bohrungsteil ausgelenkt wird. Dabei weist der erste Bohrungsteil vorzugsweise ebenso eine Umlenkschräge auf. Die Umlenkschräge kann dabei schräg zu der Drehachse oder auch senkrecht zu dieser verlaufen. Der erste Bohrungsteil, insbesondere dessen Umlenkschräge, kreuzt die Axialkraft derart, dass diese in Radialrichtung umgelenkt wird. Die Axialkraft drückt das bewegliche erste Bohrungsteil in Richtung der Drehachse, so dass das Bedienelement an dem Ventilkörper festgeklemmt wird.

Zur axialen Sicherung des Bedienelements an dem dafür vorgesehenen Ventilkörper ist der Sicherungsstift vorteilhafterweise derart tief in die Bohrung eingebracht, dass dieser an der Umlenkschräge anliegt und/oder den ersten Bohrungsteil radial nach innen drückt. Der Sicherungsstift liegt insbesondere mit seinem bohrungsseitigen Ende an der Umlenkschräge an. Durch den Sicherungsstift reduziert sich vorzugsweise der ursprüngliche erste Radius auf den zweiten Radius, da der erste Bohrungsteil radial in Richtung der Drehachse gedrückt wird. Auf diese Weise wird das Bedienelement im Wesentlichen auf den Ventilkörper geklemmt und somit axial an diesem gesichert.

Von Vorteil ist es, wenn das erste Formschlusselement als sich in Umfangsrichtung erstreckende Verzahnung ausgebildet ist. Die Verzahnung erstreckt sich vorzugsweise in Axialrichtung parallel zur Drehachse. Die Verzahnung ist vorzugsweise eine Innenverzahnung. Alternativ ist das erste Formschlusselement zylindrisch oder mehrkantig ausgebildet. Dies ermöglicht eine zuverlässige Drehmomentübertragung von dem Bedienelement auf den Ventilkörper.

Es stellt einen Vorteil dar, wenn das Bedienelement mehrere in Umfangsrichtung verteilte Axialsicherungseinheiten aufweist. Das Bedienelement weist vorzugsweise zwei, vier oder noch mehr Axialsicherungseinheiten auf. Damit wird eine zuverlässige Sicherung des Bedienelements an dem Ventilkörper erreicht.

Vorgeschlagen wird ferner eine Baueinheit für eine Sanitärarmatur. Die Baueinheit weist ein Bedienelement und einen Ventilkörper auf, die über zwei miteinander korrespondierende Formschlusselemente drehfest miteinander verbunden sind. Die Baueinheit und der Ventilkörper sind um eine gemeinsame Drehachse drehbar. Das Bedienelement weist eine Axialsicherungseinheit auf, mittels derer zur axialen Sicherung des Bedienelements an dem Ventilkörper eine Axialkraft erzeugbar ist. Die Axialkraft wirkt in Richtung der Drehachse. Das Bedienelement ist dabei gemäß einem oder mehreren der in der vorangegangenen und/oder nachfolgenden Beschreibung genannten Merkmale ausgebildet.

Um das Bedienelement an dem Ventilkörper zu befestigen, wird das erste Formschlusselement des Bedienelements auf das zweite Formschlusselement des Ventilkörpers gesteckt. Dadurch sind das Bedienelement und der Ventilkörper zunächst drehfest miteinander verbunden. Zur axialen Sicherung des Bedienelements an dem Ventilkörper weist das Bedienelement vorzugsweise mehrere in Umfangsrichtung des ersten Formschlusselements angeordnete Axialsicherungseinheiten auf. Die Axialsicherungseinheiten sind jeweils derart ausgebildet, dass eine von dieser erzeugbare Axialkraft in Richtung der Drehachse umgelenkt wird. Durch die umgelenkte Axialkraft verformt sich vorzugsweise das erste Formschlusselement ebenso in Richtung der Drehachse, so dass dieses gegenüber dem zweiten Formschlusselement verklemmt ist. Diese im Wesentlichen reibschlüssige Verbindung verhindert, dass sich das Bedienelement ungewollt von dem Ventilkörper löst. Zu Montagezwecken kann das Bedienelement durch ein Lösen der Axialsicherungseinheit von dem Ventilkörper entfernt werden.

Ferner wird eine Sanitärarmatur mit einer Baueinheit vorgeschlagen. Die Baueinheit ist dabei gemäß einem oder mehreren der in der vorangegangenen und/oder nachfolgenden Beschreibung genannten Merkmale ausgebildet. Die Baueinheit ist durch die vorteilhafte Ausbildung derart mit der Sanitärarmatur verbindbar, dass ein sauberes Spaltbild entsteht. Weiterhin wird einem Wackeln des Bedienelements an der Sanitärarmatur vorgebeugt.

Weitere Vorteile der Erfindung sind in den nachfolgenden Ausführungsbeispielen beschrieben. Es zeigen:
- **Figur 1**: eine perspektivische Ansicht einer Sanitärarmatur in einer Schnittdarstellung,
- **Figur 2**: einen Ausschnitt eines Bedienelements für eine Sanitärarmatur gemäß einem ersten Ausführungsbeispiel und
- **Figur 3**: einen Ausschnitt eines mit einem Ventilkörper verbundenen Bedienelements.

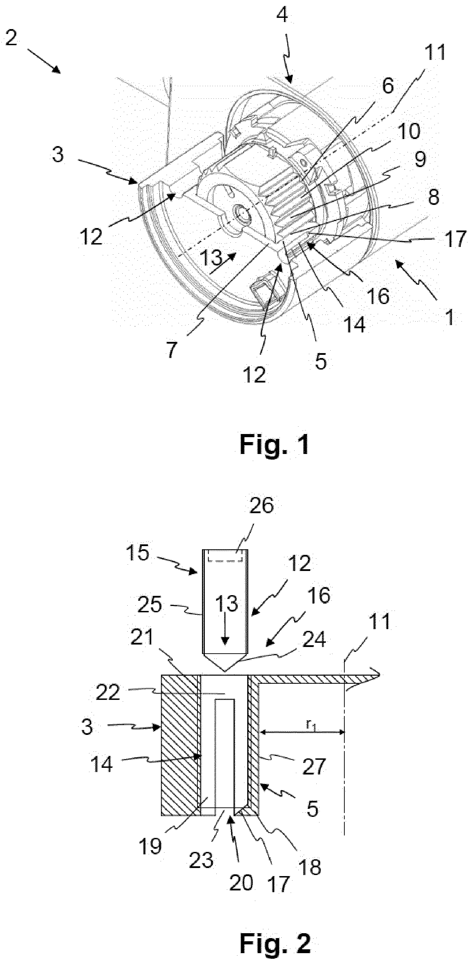

Figur 1 zeigt eine Baueinheit 1, welche zur Montage an einer Sanitärarmatur 2 vorgesehen ist. Die Baueinheit 1 weist ein Bedienelement 3 auf, mittels welchem ein Betriebszustand der Sanitärarmatur 2 eingestellt werden kann. Weiterhin weist die Baueinheit 1 einen Ventilkörper 4 auf, der über das Bedienelement 3 derart betätigt werden kann, dass ein Wasserausfluss der Sanitärarmatur 2 an- oder abgestellt wird.

Das Bedienelement 3 und der Ventilkörper 4 sind über zwei miteinander korrespondierende Formschlusselemente 5, 6 drehfest miteinander verbunden. Das erste Formschlusselement 5 ist ein Hohlzylinder 7 mit einer ersten Verzahnung 8. Die erste Verzahnung 8 ist eine Innenverzahnung. Das zweite Formschlusselement 6 ist ein Zylinder 10, der korrespondierend zu dem ersten Formschlusselement 5 ausgebildet ist, so dass das zweite Formschluss-element 6 in dem ersten Formschlusselement 5 angeordnet werden kann. Das zweite Formschlusselement weist vorzugsweise eine zweite Verzahnung 9 auf, die eine Außenverzahnung ist. Die erste und zweite Verzahnung 8, 9 sind zueinander korrespondierend ausgebildet. Das Bedienelement 3 und der Ventilkörper 4 sind um eine Drehachse 11 drehbar. Die Drehachse 11 verläuft vorzugsweise koaxial zu den beiden Formschlusselementen 5, 6.

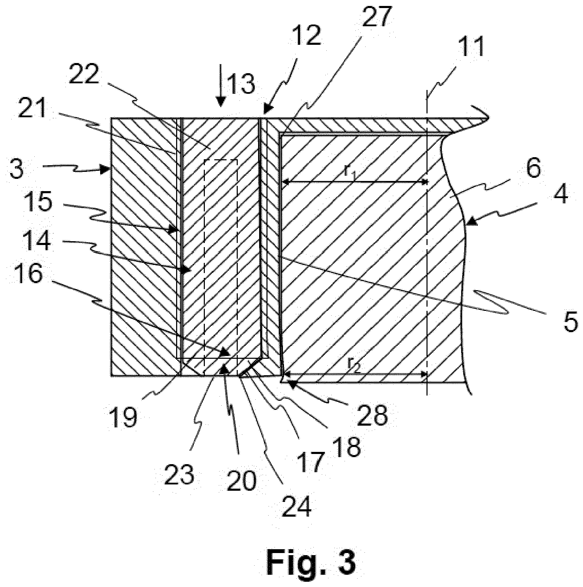

Um das Bedienelement 3 mit dem Ventilkörper 4 zu verbinden, ist das erste Formschlusselement 5 des Bedienelements 3 auf das zweite Formschluss-element 6 des Ventilkörpers 4 gestreckt. Zur Sicherung des Bedienelements 3 an dem Ventilkörper 4 weist das Bedienelement 3 wenigstens eine Axialsicherungseinheit 12 auf. Die Axialsicherungseinheit 12 kann in Richtung der Drehachse 11 eine Axialkraft 13 erzeugen. Hierzu weist die Axialsicherungseinheit 12 wenigstens eine Bohrung 14 auf. Die Bohrung 14 erstreckt sich in Axialrichtung des Bedienelements 3. Die Bohrung 14 ist radial von der Drehachse 11 beabstandet. Die Bohrung 14 ist zur Aufnahme eines Sicherungsstiftes 15 (vgl. Fig. 2 und 3), mittels welchem die Axialkraft 13 erzeugbar ist, ausgebildet. Vorzugsweise weist das Bedienelement 3 mehrere in Umfangsrichtung verteilte Axialsicherungseinheiten 12 auf.

Die Axialsicherungseinheit 12 weist ferner wenigstens einen Umlenkmechanismus 16 auf. Der Umlenkmechanismus 16 ist ausgebildet, die von der Axialsicherungseinheit 12 erzeugbare Axialkraft 13 derart umzulenken, dass das erste Formschlusselement 5 in Radialrichtung des Bedienelements 3 gegen das zweite Formschlusselement 6 des Ventilkörpers 4 drückt. Das Bedienelement 3 wird dadurch im Wesentlichen auf den Ventilkörper 4 geklemmt. Der Umlenkmechanismus 16 weist wenigstens eine erste Umlenkschräge 17 zur Aufnahme und Umlenkung der von der Axialsicherungseinheit 12, insbesondere dem Sicherungsstift 15, erzeugbaren Axialkraft 13 auf.

Weitere charakteristische Merkmale des Umlenkmechanismus 16 werden folgend in den Figuren 2 und 3 beschrieben. So zeigt die Figur 2 einen Ausschnitt des Bedienelements 3, worin die erste Umlenkschräge 17 an einem ersten Bohrungsteil 18 der Bohrung 14 angeordnet ist. Die erste Umlenkschräge 17 ist an einem dem Ventilkörper 4 zugewandten Ende des Bedienelements 3 derart angeordnet, dass sie für den Sicherungsstift 15 zugänglich ist. Neben dem ersten Bohrungsteil 18 weist die Bohrung 14 einen zweiten Bohrungsteil 19 auf. Der erste Bohrungsteil 18 ist in Radialrichtung auslenkbar. Der zweite Bohrungsteil 19 ist ortsfest. Die beiden Bohrungsteile 18, 19 sind zumindest teilweise durch eine Trennausnehmung 20 voneinander getrennt. Der erste Bohrungsteil 18 ist gegenüber dem zweiten Bohrungsteil 19 in Radialrichtung beweglich. Die Bohrung 14 weist ein Innengewinde 21 auf, welches sich über beide Bohrungsteile 18, 19 erstreckt.

Die Trennausnehmung 20 erstreckt sich axial in der Bohrung 14 in Bohrungslängsrichtung, insbesondere im Wesentlichen parallel zur Drehachse 11. Die Trennausnehmung 20 erstreckt sich von einem geschlossenen ersten Bohrungsende 22 in Richtung eines offenen zweiten Bohrungsendes 23. Das erste Bohrungsende 22 ist an einem dem Ventilkörper 4 (vgl. Fig. 1) abgewandten Ende der Bohrung 14 angeordnet. Das offene zweite Bohrungsende 23 ist ventilkörperseitig angeordnet.

Der Sicherungsstift 15 weist an seinem bohrungsseitigen Ende eine zweite Umlenkschräge 24 auf. Die Umlenkschräge 24 ist im Wesentlichen umlaufend an dem Sicherungsstift 15 ausgebildet, so dass der Sicherungsstift eine Spitze aufweist. Um den Sicherungsstift 15 in die Bohrung 14 einzubringen, ist an dem Sicherungsstift 15 ein Außengewinde 25 ausgebildet. Der Sicherungsstift 15 weist vorzugsweise an seinem der zweiten Umlenkschräge 24 abgewandten Ende eine Werkzeugaussparung 26 auf. Um den Sicherungsstift 15 in die Bohrung 14 einzubringen, wird dieser über die Werkzeugaussparung 26 in eine Drehbewegung versetzt, so dass das Außengewinde 25 des Sicherungsstifts 15 in das Innengewinde 21 der Bohrung 14 eingreift. Der Sicherungsstift 15 wird derart weit in die Bohrung 14 eingedreht, bis die zweite Umlenkschräge 24 des Sicherungsstifts gegen die erste Umlenkschräge 17 des Umlenkmechanismus 16, insbesondere des ersten Bohrungsteils 18, drückt (vgl. Fig. 3).

Zwischen dem ersten Formschlusselement 5 und der Drehachse 11 ist ein erster Radius r₁ ausgebildet. Der erste Radius r₁ ist zwischen einer Außenwand 27 des beweglichen ersten Bohrungsteils 18 und der Drehachse 11 ausgebildet. Die Außenwand 27 bildet im Wesentlichen einen Teil des ersten Formschlusselements 5, insbesondere die Innenverzahnung, aus. Der erste Radius r₁ ist zwischen dem ersten Bohrungsteil 18 und der Drehachse 11 ausgebildet, wenn der Sicherungsstift 15 nicht in der Bohrung 14 angeordnet ist. Der erste Bohrungsteil 18 ist nicht ausgelenkt, wenn der Sicherungsstift 15 nicht in der Bohrung 14 angeordnet ist.

Die Figur 3 zeigt das Bedienelement 3 mit eingebrachtem Sicherungsstift 15. Der Sicherungsstift 15 ist so weit in die Bohrung 14 eingedreht, bis die zweite Umlenkschräge 24 des Sicherungsstifts 15 gegen die erste Umlenkschräge 17 des ersten Bohrungsteils 18 drückt. Durch die Axialkraft 13 des Sicherungsstifts 15 wird der erste Bohrungsteil 18 zumindest im Bereich seiner ersten Umlenkschräge 17 in Richtung der Drehachse 11 gedrückt. Der erste Bohrungsteil 18 ist im Bereich des zweiten Bohrungsendes 23 der Trennausnehmung 20 nach Innen verschoben. Zwischen dem ausgelenkten Teil des ersten Bohrungsteils 18 und der Drehachse 11 ist infolge der radialen Auslenkung ein zweiter Radius r₂ ausgebildet. Der zweite Radius r₂ ist kleiner als der erste Radius r₁.

Durch die Auslenkung des ersten Bohrungsteils 18 in Richtung der Drehachse 11 infolge der Umlenkung der Axialkraft 13 in Radialrichtung verkleinert sich der Abstand des ersten Bohrungsteils 18 zur Drehachse 11. Da die Außenwand 27 des ersten Bohrungsteils 18 im Wesentlichen das erste Formschlusselement 5 ausbildet, wird das erste Formschlusselement 5 ebenso in Richtung der Drehachse 11 verschoben. Wenn das erste Formschlusselement 5 und das zweite Formschlusselement 6 miteinander verbunden sind, drückt das erste Formschlusselement 5 durch die Umlenkung der Axialkraft 13 gegen das zweite Formschlusselement 6. Die beiden Formschlusselemente 5, 6 sind hierdurch miteinander verklemmt. Das Bedienelement 3 ist an dem Ventilkörper 4 gesichert angeordnet.

Die Auslenkung des ersten Bohrungsteils 18 ist schematisch dargestellt. Der erste Bohrungsteil 18 ist durch die umgelenkte Axialkraft 13 in Richtung der Drehachse 11 ausgelenkt. Das zweite Formschlusselement 6 ist hierdurch in einem Druckbereich 28 leicht verformt, so dass sich die Ausdehnung des zweiten Formschlusselements 6 quer zur Drehachse reduziert. Die beiden Formschlusselemente 5, 6 sind gegeneinander verklemmt, so dass sich das Bedienelement 3 nicht von dem Ventilkörper 4 lösen kann.

Der Sicherungsstift 15 und die Bohrung 14 sind gemäß einem alternativen nicht dargestellten Ausführungsbeispiel jeweils ohne das Außen- und/oder Innengewinde 21, 25 ausgebildet. Der Sicherungsstift 15 wird dabei in die Bohrung 14 eingedrückt und/oder eingepresst, bis die zweite Umlenkschräge 24 gegen die erste Umlenkschräge 17 drückt.

In den Figuren 1 bis 3 ist jeweils an dem Sicherungsstift 15 und dem ersten Bohrungsteil 18 jeweils die erste oder zweite Umlenkschräge 17, 24 ausgebildet. In einem alternativen Ausführungsbeispiel umfasst der Umlenkmechanismus 16 lediglich an dem Sicherungsstift 15 die zweite Umlenkschräge 24. An dem ersten Bohrungsteil 18 ist im Bereich des offenen zweiten Bohrungsendes 23 ein nicht dargestellter Anschlag ausgebildet. Der Anschlag verläuft im Wesentlichen senkrecht zur Drehachse 11. Zur Umlenkung der Axialkraft 13 wird der Sicherungsstift 15 zumindest soweit in die Bohrung 14 eingebracht, dass die zweite Umlenkschräge 24 des Sicherungsstifts 15 gegen den Anschlag stößt. Durch den Anschlag sowie den beweglichen ersten Bohrungsteil 18 wird die Axialkraft 13 in Radialrichtung umgelenkt. Das erste Formschlusselement 5 drückt folglich gegen das zweite Formschlusselement 6, so dass das Bedienelement 3 axial gesichert ist.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Baueinheit
- 2: Sanitärarmatur
- 3: Bedienelement
- 4: Ventilkörper
- 5: erstes Formschlusselement
- 6: zweites Formschlusselement
- 7: Hohlzylinder
- 8: erste Verzahnung
- 9: zweite Verzahnung
- 10: Zylinder
- 11: Drehachse
- 12: Axialsicherungseinheit
- 13: Axial kraft
- 14: Bohrung
- 15: Sicherungsstift
- 16: Umlenkmechanismus
- 17: erste Umlenkschräge
- 18: erster Bohrungsteil
- 19: zweiter Bohrungsteil
- 20: Trennausnehmung
- 21: Innengewinde
- 22: erstes Bohrungsende
- 23: zweites Bohrungsende
- 24: zweite Umlenkschräge
- 25: Außengewinde
- 26: Werkzeugaussparung
- 27: Außenwand
- 28: Druckbereich
- r₁: erster Radius
- r₂: zweiter Radius

## Patentansprüche

1. Bedienelement (3) für eine Sanitärarmatur (2)
mit einem ersten Formschlusselement (5), mit dem das um eine Drehachse (11) drehbare Bedienelement (3) drehfest mit einem korrespondierenden zweiten Formschlusselement (6) eines dafür vorgesehenen Ventilkörpers (4) verbindbar ist, und
mit zumindest einer Axialsicherungseinheit (12), mittels derer zur axialen Sicherung des Bedienelements (3) an dem dafür vorgesehenen Ventilkörper (3) in Richtung der Drehachse (11) eine Axialkraft (13) erzeugbar ist,
**dadurch gekennzeichnet,**
**dass** die Axialsicherungseinheit (12) wenigstens einen Umlenkmechanismus (16) aufweist,
der die Axialkraft (13) derart umlenkt, dass das erste Formschluss-element (5) in Radialrichtung des Bedienelements (3) gegen das zweite Formschlusselement (6) des dafür vorgesehenen Ventilkörpers (4) drückbar ist.

2. Bedienelement nach dem vorherigen Anspruch, **dadurch gekennzeichnet, dass** der Umlenkmechanismus (16) eine, insbesondere schräg zur Drehachse (11) verlaufende, Umlenkschräge (17, 24) zur Aufnahme und Umlenkung der Axialkraft (13) aufweist.

3. Bedienelement nach einem der vorherigen Ansprüche, **dadurch gekennzeichnet, dass** die Axialsicherungseinheit (12) eine sich in Axialrichtung erstreckende und/oder von der Drehachse (11) radial beabstandete Bohrung (14) und/oder einen in der Bohrung (14), insbesondere über eine Schraubverbindung, befestigten Sicherungsstift (15) aufweist.

4. Bedienelement nach einem der vorherigen Ansprüche, **dadurch gekennzeichnet, dass** die Bohrung (14) einen in Radialrichtung auslenkbaren, insbesondere schwenk- und/oder verschiebbaren, ersten Bohrungsteil (18) und/oder
einen ortsfesten zweiten Bohrungsteil (19) aufweist.

5. Bedienelement nach einem der vorherigen Ansprüche, **dadurch gekennzeichnet, dass** die beiden Bohrungsteile (18, 19) zumindest teilweise durch eine Trennausnehmung (20) voneinander getrennt sind, so dass der erste Bohrungsteil (18) gegenüber dem zweiten Bohrungsteil (19) in Radialrichtung beweglich ist.

6. Bedienelement nach einem der vorherigen Ansprüche, **dadurch gekennzeichnet, dass** sich die Trennausnehmung (20) in Bohrungslängsrichtung und/oder von Seiten eines geschlossenen ersten Bohrungsendes (22) in Richtung eines offenen zweiten Bohrungsendes (23) erstreckt.

7. Bedienelement nach einem der vorherigen Ansprüche, **dadurch gekennzeichnet, dass** die Umlenkschräge (17, 24) am ersten Bohrungsteil (18) und/oder am Sicherungsstift (15) ausgebildet ist.

8. Bedienelement nach einem der vorherigen Ansprüche, **dadurch gekennzeichnet, dass** zur axialen Sicherung des Bedienelements (3) an dem dafür vorgesehenen Ventilkörper (3) der Sicherungsstift (15) derart tief in die Bohrung (14) eingebracht ist, dass dieser, insbesondere mit seinem bohrungsseitigen Ende, an der Umlenkschräge (17, 24) anliegt und/oder den ersten Bohrungsteil (18) radial nach innen drückt.

9. Bedienelement nach einem der vorherigen Ansprüche, **dadurch gekennzeichnet, dass** das erste Formschlusselement (5) als sich in Umfangsrichtung erstreckende Verzahnung (8), insbesondere Innenverzahnung, ausgebildet ist.

10. Bedienelement nach einem der vorherigen Ansprüche, **dadurch gekennzeichnet, dass** das Bedienelement (3) mehrere in Umfangsrichtung verteilte Axialsicherungseinheiten (12) aufweist.

11. Baueinheit (1) für eine Sanitärarmatur (2)
mit einem Bedienelement (3) und
einem Ventilkörper (3),
die über zwei miteinander korrespondierende Formschlusselemente (5, 6) drehfest miteinander verbunden und um eine gemeinsame Drehachse (11) drehbar sind,
wobei das Bedienelement (3) eine Axialsicherungseinheit (12) aufweist, mittels derer zur axialen Sicherung des Bedienelements (3) an dem Ventilkörper (3) in Richtung der Drehachse (11) eine Axialkraft (13) erzeugbar ist,
**dadurch gekennzeichnet,**
**dass** das Bedienelement (3) nach einem der vorherigen Ansprüche ausgebildet ist.

12. Sanitärarmatur (2) mit einer Baueinheit (1) gemäß dem vorherigen Anspruch.
